(19)

Europäisches
Patentamt
European
Patent Office
Office européen
des brevets

(11) **EP 4 254 252 A1**

(12) **EUROPEAN PATENT APPLICATION**

(43) Date of publication:
**04.10.2023 Bulletin 2023/40**

(21) Application number: **22305411.5**

(22) Date of filing: **31.03.2022**

(51) International Patent Classification (IPC):
***G06F 30/17*** (2020.01)   ***G06F 30/20*** (2020.01)
*G06F 113/08* (2020.01)   *G06F 111/06* (2020.01)
*G06F 119/08* (2020.01)   *G06F 119/18* (2020.01)

(52) Cooperative Patent Classification (CPC):
**G06F 30/17; G06F 30/20;** G06F 2111/06;
G06F 2113/08; G06F 2119/08; G06F 2119/18

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systèmes
78140 Vélizy-Villacoublay (FR)**

(72) Inventors:
• **SCHMIDT, Martin-Pierre
  Vélizy-Villacoublay (FR)**

• **CLAUSEN, Peter
  Karlsruhe (DE)**
• **PEDERSEN, Claus Bech Wittendorf
  Hamburg (DE)**
• **HEBRARD, Pascal
  Vélizy-Villacoublay (FR)**

(74) Representative: **Bandpay & Greuter
30, rue Notre-Dame des Victoires
75002 Paris (FR)**

Remarks:
Amended claims in accordance with Rule 137(2)
EPC.

(54) **GRADIENT-BASED CAD MODEL OPTIMIZATION**

(57)     The disclosure notably relates to a computer-implemented method for designing a manufacturing product. The method comprises providing a CAD model representing the manufacturing product. The CAD model includes a feature tree. The feature tree has one or more CAD parameters each having an initial value. The method also comprises providing an optimization program. The optimization program is specified by one or more use and/or manufacturing performance indicators. The one or more indicators comprise one or more objective function(s) and/or one or more constraints. The method further comprises modifying the initial values of the one or more CAD parameters by solving the optimization program using a gradient-based optimization method. The optimization method has as free variable the one or more CAD parameters and uses sensitivities. Each sensitivity is an approximation of a respective derivative of a respective performance indicator with respect to a respective CAD parameter.

**EP 4 254 252 A1**

**Description**

**TECHNICAL FIELD**

The disclosure relates to the field of computer programs and systems, and more specifically to a method, system and program for designing a manufacturing product using a gradient-based CAD model optimization.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Designing a manufacturing product may comprise performing an optimization of the underlying CAD model for optimizing a use and/or manufacturing indicator of the product.

There is however still a need for an improved method for designing a manufacturing product using a gradient-based CAD model optimization.

**SUMMARY**

It is therefore provided a computer-implemented method for designing a manufacturing product. The method comprises providing a CAD model representing the manufacturing product. The CAD model includes a feature tree. The feature tree has one or more CAD parameters each having an initial value. The method also comprises providing an optimization program. The optimization program is specified by one or more use and/or manufacturing performance indicators. The one or more indicators comprise one or more objective function(s) and/or one or more constraints. The method further comprises modifying the initial values of the one or more CAD parameters by solving the optimization program using a gradient-based optimization method. The optimization method has as free variable the one or more CAD parameters. The optimization method uses sensitivities. Each sensitivity is an approximation of a respective derivative of a respective performance indicator with respect to a respective CAD parameter.

The method may comprise one or more of the following:

- the sensitivities are compositions of:

  ◦ approximated respective derivatives each of a respective performance indicator with respect to a scalar field, the scalar field being an implicit representation of the manufacturing product, and
  ◦ approximated respective derivatives each of the scalar field with respect to a respective CAD parameter;

- the sensitivities are compositions of:

  ◦ approximated respective derivatives each of a respective performance indicator with respect to a density field, the density field representing a distribution of material density of the manufacturing product,
  ◦ approximated respective derivatives each of the density field with respect to a signed distance field, the signed distance field being a distribution of signed distances with respect to an outer surface representation of the manufacturing product, and
  ◦ approximated respective derivatives each of the signed distance field with respect to a respective CAD parameter;

- the density field corresponds to a projection of the signed distance field by a function that maps ] - oo; +∞[ onto [0; 1] and that has well-defined first order derivatives;
- the function is a smooth Heaviside projection;
- the density field is a distribution of material density values $\rho_i(SDF_i)$, with $\rho_i$ being a smooth Heaviside projection of $SDF_i$ of the type:

$$\rho_i(SDF_i) = \frac{1}{1 + e^{\frac{SDF_i}{0.2\alpha \times 2l}}}, \qquad \forall\, i \in \omega,$$

where the signed distance field is a distribution of signed distances $SDF_i$ each from an element i of a discretization $\omega$ of a region encompassing a geometric representation of the product to the outer surface representation of the product, where $\alpha \geq 0$ is a steepness coefficient of the smooth Heaviside projection, and where $l$ is an average size of the elements in the discretization;

- each respective approximated derivative $\frac{\delta \rho_i}{\delta SDF_i}$ of the density field with respect to the signed distance field is of the type:

$$\frac{\delta \rho_i}{\delta SDF_i} = -\frac{e^{\frac{SDF_i}{0.2\alpha \times 2l}}}{\left(1 + e^{\frac{SDF_i}{0.2\alpha \times 2l}}\right)^2}, \qquad \forall i \in \omega;$$

- each respective approximated derivative $\frac{\delta SDF_i}{\delta CAD_m}$ of the signed distance field with respect to a respective CAD parameter is of the type:

$$\frac{\delta SDF_i}{\delta CAD_m} \cong \frac{SDF_i\left(CAD_m + \frac{h_m}{2}\right) - SDF_i\left(CAD_m - \frac{h_m}{2}\right)}{h_m}, \qquad \forall i \in \omega, m \in \Omega_{param},$$

where the signed distance field is a distribution of signed distances $SDF_i$ each from an element i of a discretization $\omega$ of a region encompassing a geometric representation of the product to the outer surface representation of the product, where $\Omega_{param}$ is a set of the CAD parameters, where $CAD_m$ is a respective CAD parameter of the set, and where $h_m > 0$ is a small perturbation;

- each sensitivity $\frac{\delta KPI_n}{\delta CAD_m}$ is of the type:

$$\frac{\delta KPI_n}{\delta CAD_m} = \sum_{i \in \omega} \frac{\delta KPI_n}{\delta \rho_i} \frac{\delta \rho_i}{\delta SDF_i} \frac{\delta SDF_i}{\delta CAD_m}, \qquad \forall n \in \Omega_{score}, m \in \Omega_{param}$$

where the signed distance field is a distribution of signed distances $SDF_i$ each from an element i of a discretization $\omega$ of a region encompassing a geometric representation of the product to the outer surface representation of the product, where $\Omega_{param}$ is a set of the CAD parameters, where $CAD_m$ is the respective CAD parameter, where the density field is a distribution of material density values $\rho_i(SDF_i)$, where $KPI_n$ is the respective performance indicator, and where $\Omega_{score}$ is the set of performance indicators; and/or

- the method comprises, prior to solving the optimization program, computing the sensitivities.

It is further provided a computer program comprising instructions for performing the method, i.e. instructions which, when the program is executed on a computer, cause the computer to carry out the method.

It is further provided a computer readable storage medium having recorded thereon the computer program.

It is further provided a system comprising a processor coupled to a memory, the memory having recorded thereon the computer program. The processor may also be coupled to a graphical user interface.

**BRIEF DESCRIPTION OF THE DRAWINGS**

Non-limiting examples will now be described in reference to the accompanying drawings, where:

- FIG.s 1 to 11 Illustrate the method; and

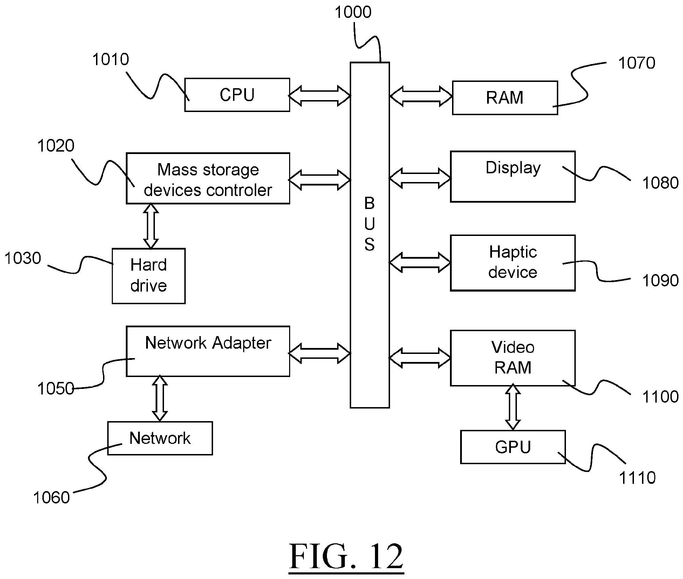

- FIG. 12 shows an example of the system.

**DETAILED DESCRIPTION**

It is provided a computer-implemented method for designing a manufacturing product. The method comprises providing a CAD model representing the manufacturing product. The CAD model includes a feature tree. The feature tree has one or more CAD parameters each having an initial value. The method also comprises providing an optimization program. The optimization program is specified by one or more use and/or manufacturing performance indicators. The one or more indicators comprise one or more objective function(s) and/or one or more constraints. The method further comprises modifying the initial values of the one or more CAD parameters by solving the optimization program using a gradient-based optimization method. The optimization method has as free variable the one or more CAD parameters. The optimization method uses sensitivities. Each sensitivity is an approximation of a respective derivative of a respective performance indicator with respect to a respective CAD parameter.

The method constitutes an improved solution for designing a manufacturing product using a gradient-based CAD model optimization.

Notably, the method optimizes one or more performance indicators of a CAD model, which correspond to one or more performance indicators of the manufacturing product. The method does so by solving an optimization program using an optimization method which has the CAD parameters of the CAD model as free variable, and thus which acts on these parameters for the optimization, to find or tend to find the optimal parameters. The method thus optimizes directly a CAD model including a feature tree. Furthermore, the optimization method used by the method is a gradient-based optimization method, which is an efficient (in terms of computation times and use of CPU and/or memory resources) optimization method that allows to handle an optimization with many variables (here, many CAD parameters). The method enables to use such an efficient optimization method since the method uses the sensitivities , the sensitivities being approximations of derivatives of performance indicators with respect to CAD parameters (i.e. the free variables of the optimization). In other words, the method optimizes directly a CAD model, and with a gradient-based optimization, thus in an efficient manner.

The method thus links the performances indicators (also referred to as KPIs-Key Performance Indicators- of the design (e.g. physical and/or geometrical objectives and/or constraints)) with the design variables to be optimized (i.e. the CAD parameters). The method allows to perform the optimization with respect to any CAD parameter or set of CAD parameters, related to any possible CAD feature available in the CAD software. The method also allows to perform the optimization with respect to a high number of CAD parameters, since the use of a gradient-based optimization, made possible thanks to the sensitivities provided by the method, allows to handle such a high number while avoiding combinatorial explosion and exponentially increasing computational runtimes. Examples of the method discussed hereinafter provide a fast and robust manner to numerically but accurately approximate the derivatives of the KPIs with respect to the CAD parameters and thereby, enabling efficient gradient-based optimization of CAD models having many design variables. Analytically computing the derivatives of each KPI with respect to every possible type of CAD parameters is challenging. Moreover, CAD parameters can interact or even nullify each other in the CAD model causing the computation of analytical derivatives to be generally infeasible. Examples of the method discussed hereinafter allows to solve these problems.

The method allows optimizing directly a high-level CAD representation, meaning that the output optimized model is still a CAD model (contrary to *e.g.* Topology Optimization or other non-parametric optimization approaches). It uses highly efficient gradient-based optimization schemes to quickly converge to improved designs. Therefore, the method is faster for simple optimization problems but also have a significantly better numerical scaling in computational costs and thereby, allowing the optimization problem to have a much larger number of design variables (contrary to e.g. Trial-and-Error Parametric Design Optimization or other zero order optimization approaches).

The method allows controlling the "smoothness" of the optimization problem to efficiently navigate the feasible solution space. Especially, this permits smoothly optimizing models even if they start as topologically and geometrically disconnected solids. The method is compatible with any real-valued CAD parameter without any additional implementation or interfacing effort with the CAD representation (contrary to e.g. Moving Morphable Components or similar approaches): as long as the high level design parameter modifies the geometry in some way, it should affect the intermediate implicit field and therefore, be captured by the calculated gradients. Numerically, the method is robust with respect to heterogeneous parameters and drastic changes in the geometry or the topology which are to be expected for CAD models of industrial design applications. The method is compatible with any existing KPI for which one can obtain the sensitivities used in the method, e.g. derivatives with respect to the low level variables of the intermediate implicit field in examples of the method. Therefore, the method's approach synergizes well with and benefits directly from already existing commercial components present in FEA software packages such as Abaqus/Tosca.

The method also allows ensuring manufacturability of the designs by preserving the characteristics of the CAD model. For example:

- CAD model defined as a thin plate trimmed by a 2D sketch will necessarily be manufacturable via laser-cutting, plasma-cutting or 2.5-axis milling,
- CAD models defined as a revolution of non-overlapping profile around an axis will be manufacturable via turning or lathe machining, or
- CAD models defined with operators preventing overhang regions will be more easily manufacturable via additive manufacturing, molding or casting.

The method is for designing a manufacturing product. "Designing a manufacturing product" designates any action or series of actions which is at least a part of a process of elaborating a modeled object (3D or 2D) of the manufacturing product. In the case of the method, the method forms a design step that consists in the optimization of a CAD model (that provided as input to the method). The method outputs a CAD model which may be the basis for a further use of the optimized CAD model for manufacturing the manufacturing product. The method may thereby be included in a production process for producing the manufacturing product, as further discussed hereinafter.

The method comprises providing the CAD model representing the manufacturing product and the optimization program. The provided CAD model and the optimization program thus form inputs of the method. The provided CAD model may be referred to as "the input CAD model". The provided CAD model is a feature-based CAD model that includes a feature tree. The concept of feature-based CAD model is known *per se* from CAD and is further discussed hereinafter. Likewise, the concept of feature-tree is well-known from CAD. The feature tree is a tree organization of CAD operations (e.g. including Boolean and non-Boolean operations) on CAD features that each model a portion of the manufacturing product. More specifically, the feature tree is a directed acyclic graph (as discussed in https://en.wikipedia.org/wiki/Directed_acyclic_graph)that describes/captures the order of sequence and combination of the CAD operations. As known *per se* from CAD, a CAD feature includes shape/geometry information and parametric information for representing a portion of the manufacturing product modeled/captured by the CAD feature. The CAD feature may as known comprise a definition/specification of a geometry/shape corresponding to the portion modeled by the CAD feature (e.g. a definition/specification geometric primitive) and one or more CAD parameters that specify the geometry and its topology. The feature tree thus includes one or more CAD parameters each being respective to a respective CAD feature of the feature tree. Non-limitative examples of such CAD parameters include: coordinates of a point in a sketch, height of extrusion of a profile, thickness of a shell, radius of a fillet, and smoothness of a loft surface. Each parameter of the input CAD model has an initial value, e.g. that may result from an earlier design process as discussed hereinafter.

The CAD model may be a 2D CAD model (i.e. forming a 2D CAD representation of the manufacturing product) or a 3D CAD model (i.e. forming a 3D CAD representation of the manufacturing product). The CAD model may include, besides the feature tree, a 2D geometrical representation (if the model is 2D) or 3D geometrical representation (if the model is 3D), for example a B-rep obtained by executing the feature tree. The geometrical representation may be or include an outer surface geometrical representation of the product.

The input CAD model may stem from a previous design process (e.g. performed on another system or software, e.g. during another design session). Providing the CAD model may comprise downloading the CAD model from a memory or server on which the CAD model has been stored further to its design. Alternatively, providing the CAD model may comprise designing the CAD model. Designing the CAD model may comprise designing the CAD model from scratch on a CAD system, e.g. by iteratively building the feature tree. Alternatively, designing the CAD model may comprise designing first a CAE model (*i.e.* a finite element model) representing the manufacturing product on a CAE system, using any CAE software solution, and converting the CAE model into a CAD model using any CAD-to-CAE conversion method, and optionally then storing the CAD model on a memory or server. Providing the CAD model may yet comprise downloading an already designed CAE model, e.g. from a memory or server on which the CAE model has been stored further to its design, and then converting the CAE model into the input CAE model.

Providing the optimization program may comprise downloading the optimization program from any memory or server where the program is available. Alternatively, providing the optimization program may comprise launching any software where the program is implemented. Yet alternatively, providing the optimization program may comprise coding/programming the optimization program or downloading (and optionally modifying) an already coded/programmed optimization program.

The optimization program comprises an optimization algorithm to solve an optimization problem. The optimization problem refers to a mathematical optimization problem that consist in minimizing or maximizing one or more objective functions, optionally under one or more constraints, or minimizing or maximizing any other quantity under the constraint(s). The optimization program is thus specified by one or more use and/or manufacturing indicators that comprise the objective function(s) and/or the constraint(s). The optimization program comprises an optimization algorithm that performs such a minimization or maximization. The optimization program may be designed so that data about the optimization may be inputted by a user prior to launching the optimization program, said data including the objective function(s), the constraint(s), any convergence threshold, and/or any maximal value of iterations steps for the algorithm. The method may comprise a step of a user providing at least a part of such data, prior to the optimization step. The optimization program may also be designed so that a user may select an optimization method to perform the optimization. The method may comprise a step of a user selecting the optimization method. The selection of the optimization method may be constrained to a predefined list of optimization methods, i.e. the user may only select a method within this list. The list may consists in gradient-based optimization methods only, as the optimization method used by the method is a gradient-based optimization method. The concept of gradient-based optimization method, also referred to as "gradient method", is well known (see for example https://en.wikipedia.org/wiki/Gradient method). The gradient-based optimization method used by the method may be any one of the methods of the following list (which may form the previously-discussed list for a user-selection): gradient descent, stochastic gradient descent, coordinate descent, Frank-Wolfe algorithm, Landweber iteration, random coordinate descent, conjugate gradient method, derivation of the conjugate gradient method, nonlinear conjugate gradient method, biconjugate gradient method, biconjugate gradient stabilized method, and method of moving asymptotes.

The one or more use and/or manufacturing performance indicators are data that define the underlying optimization problem, i.e. the optimization problem amounts to optimize the performances of the manufacturing product represented by the CAD model with respect to this/these performance indicator(s). A performance indicator is in other words data (e.g. a mathematical expression, such as a mathematical function or constraint (e.g. captured by an equation or a system of equations)) that measure a performance to be achieved and/or respected by the manufacturing product represented by the CAD model. The performance is with respect to use and/or manufacturing, i.e. the performance is a physical performance (*e.g.* a behavior) of the manufacturing product during use and/or during manufacturing, as the indicator is a use and/or manufacturing performance indicator. A performance of the product during use is a physical behavior of the product with respect to a given use of the product, such as a thermal behavior of the product, an aerodynamic behavior of the product, or a structural behavior of the product, e.g. when the product is subject to one or more loads (e.g. thermal forces, structural loads, or fluid flows). A performance of the product during manufacturing is a physical behavior of the product with respect to a given manufacturing process of the product, such as a compliance of the product with constraints of the manufacturing process and/or with specifications of a manufacturing tool carrying out the process.

The one or more indicators comprise one or more objective function. An objective function is herein a function of which value is to be optimized (i.e. minimized or maximized) by the optimization. The objective function measures a performance of the product with respect to use and/or manufacturing of the product, the function having as variable the CAD model or one or more CAD parameters. The function outputs a value that is large when the performance is achieved, in which case the function is to be maximized, or a value that is small when the performance is achieved, in which case the function is to be minimized.

The one or more indicators may additionally or alternatively comprise one or more constraints. A constraint is herein a mathematical expression (e.g. an equation or a set of equations, or a fixed value of a parameter) that is to be respected during the optimization. The constraint captures a performance that the manufacturing product is to fulfill (that is, mandatorily), such as a prescribed total volume of material of the product. The optimization may optimize the objective function(s) under the constraint(s), i.e. the optimization aims at finding the variable values that optimize the objective function(s) while fulfilling the constraint(s).

Examples of performance indicators (also referred to as KPI's) in mechanical design and that may be involved in the method are: maximize stiffness, minimize mass, minimize peak stress, maximize heat transfer coefficient, maximize force transfer in compliant mechanisms, maximize displacement in compliant mechanisms, maximize first eigen-frequency, maximize bandgap in photonic crystal structures, ensure a minimum or maximum geometrical length scale, minimize overhang volumes, minimize surface curvature, enforce a minimum drafting angle, minimize the volume of enclosed voids (e.g. for downstream additive or subtractive manufacturing).

Further to the providing of the inputs, the method comprises modifying the initial value of the one or more CAD parameters. The modification of the initial value of the one or more CAD parameters may be referred to as the optimization of the one or more CAD parameters. Indeed, this step finds or tends to find the value(s) of the one or more CAD parameters, which are free variables of the optimization, that optimize the one or more objective function(s) and/or that fulfill the one or more constraints. Modifying the initial values thus consist in an optimization that solves the optimization program, i.e. that runs the optimization algorithm of the optimization program to solve the underlying optimization problem.

The optimization uses a gradient-based optimization method, as previously discussed. The optimization method has as free variables the one or more CAD parameters of which values are to be modified to perform the optimization, and uses sensitivities of the performance indicators with respect to these variables (i.e. derivatives approximations) to perform the optimization, since the method is gradient-based, as known *per se* in the field of optimization. In other words, the CAD parameters (e.g. hull/shell thickness, fillet radius) are the free variables of the optimization that the optimization method can modify (i.e. the optimization can modify the values of the CAD parameters) to optimize the performance indicators, and the sensitivities correspond to partial derivatives of the indicators to optimize with respect to the free variables. Each sensitivity is an approximation of a respective derivative of a respective performance indicator with respect to a respective CAD parameter. For each respective performance indicator, and each respective CAD parameter, there may be a respective sensitivity that is an approximation of the derivative of the respective performance indicator with respect to the respective CAD parameter. The sensitivities may be any suitable approximation of the respective derivatives. The method may include, prior to the optimization, a step of computing the sensitivities and/or the performance indicators.

The sensitivities may be compositions of

-    approximated respective derivatives each of a respective performance indicator with respect to a scalar field, and
-    approximated respective derivatives each of the scalar field with respect to a respective CAD parameter.

The scalar field is an implicit representation of the manufacturing product. The scalar field is a distribution of scalar values on a discrete 3D or 2D space including the previously discussed 3D or 2D geometrical (e.g. outer surface) representation of the product (depending on whether the CAD model is 2D or 3D), where each scalar value indicates an extent of presence of material constitutive of the product. The discrete space may for example be a mesh of volumetric or surface elements (e.g. the elements being tetrahedral/triangular, hexahedral, or regular cubes/squares), and each scalar value may be respective to a respective element, i.e. may indicate an extent of presence of material constitutive of the product at the respective element.

The scalar field allows to compute the sensitivities efficiently, thus allowing to save CPU and/or memory resources required for the optimization. Indeed, computing the approximated derivatives of the performance indicators with respect to the scalar field, and those of the scalar field with respect to the CAD parameters can be efficiently performed. The previously discussed step of computation of the sensitivities may comprise computing the implicit field representation, and computing the approximated derivatives of the performance indicators with respect to the scalar field and the derivatives of the scalar field with respect to the CAD parameters, by any suitable method.

The sensitivities may be compositions of:

-    approximated respective derivatives each of a respective performance indicator with respect to a density field,
-    approximated respective derivatives each of the density field with respect to a signed distance field, and
-    approximated respective derivatives each of the signed distance field with respect to a respective CAD parameter.

The density field is a particular scalar field that represents a distribution of material density of the manufacturing product. In other words, the density field is a distribution of density values on said discrete 3D or 2D space including the 3D or 2D geometrical representation of the product, where each value indicates a material density of the product. Each density value may be respective to a respective element of the discrete representation, i.e. may indicate material density at the respective element. The signed distance field is a known concept. The signed distance field a distribution of signed distances with respect to an outer surface representation of the manufacturing product. In other words, the signed distance field is distribution of signed distances values on said discrete 3D or 2D space, the latter including an outer surface representation of the manufacturing product. Each signed distance value may be respective to an element of the discrete space and may indicate a value of a distance (e.g. Euclidean distance, Manhattan distance, pixel distance) of this element to the outer surface representation, the value having a sign when the element corresponds to an inside portion of the manufacturing product and the opposite sign when the element corresponds to an outside portion of the manufacturing product.

Using the density field and the signed distance field allows to compute the sensitivities efficiently, thus allowing to save CPU and/or memory resources required for the optimization. Indeed, computing the approximated derivatives of the performance indicators with respect to the density field, those of the density field with respect to the signed distance field, and those of the signed distance field with respect to the CAD parameters can be efficiently performed. The previously discussed step of computation of the sensitivities may comprise computing the density field and the signed distance field, and computing the approximated derivatives of the performance indicators with respect to the density field, those of the density field with respect to the signed distance field, and those of the signed distance field with respect to the CAD parameters, by any suitable method.

The discrete space may be any regular grid or mesh discretization, which allows the most efficient computations, notably of the signed distance field.

The density field may correspond to, e.g. be the result of or the image of, a projection of the signed distance field by a function that maps ] - oo; +∞[ onto [0; 1] and that has well-defined first order derivatives. The function may be a smooth Heaviside projection or any suitable approximation thereof.

The density field may for example be a distribution of material density values $\rho_i(SDF_i)$ with $\rho_i$ being a smooth Heaviside projection of $SDF_i$ of the type:

$$\rho_i(SDF_i) = \frac{1}{1 + e^{\frac{SDF_i}{0.2\alpha \times 2l}}}, \qquad \forall\, i \in \omega,$$

where the signed distance field is a distribution of signed distances $SDF_i$ each from an element (*e.g.* volume element or surface element, depending on whether said discrete space is 2D or 3D) i of a discretization $\omega$ of a region encompassing a geometric representation of the product (*i.e.* $\omega$ represents said 3D or 2D discrete space) to the outer surface representation of the product, where $\alpha \geq 0$ is a steepness coefficient of the smooth Heaviside projection, and where $l$ is an average size of the elements in the discretization. $\alpha$ may be lower than 10, for example lower than 5, for example lower than 2, for example equal to 1. Controlling the value of the steepness coefficient can be help navigate highly non-linear solution spaces by "smoothing out" the non-linearity at the beginning of the optimization process and then progressively increasing the steepness coefficient as the optimization converges. This projection allows to transform the signed distances into physically interpretable density values. Any other function approximating the Heaviside function with the appropriate output range and well-defined first order derivatives may alternatively be used instead of the above smooth Heaviside projection.

Each respective approximated derivative $\frac{\delta\rho_i}{\delta SDF_i}$ of the density field with respect to the signed distance field may be of the type:

$$\frac{\delta\rho_i}{\delta SDF_i} = -\frac{e^{\frac{SDF_i}{0.2\alpha \times 2l}}}{\left(1 + e^{\frac{SDF_i}{0.2\alpha \times 2l}}\right)^2}, \qquad \forall i \in \omega.$$

Separating the density projection from the SDF allows using a separate differentiation strategy. This is advantageous because finite difference schemes can be less reliable for highly non-linear functions such as this density projection step. On the other hand, analytical derivation is perfectly tractable for this choice of smooth Heaviside projection and yields the exact solution for negligible computational cost.

Each respective approximated derivative $\frac{\delta SDF_i}{\delta CAD_m}$ of the signed distance field with respect to a respective CAD parameter may be of the type:

$$\frac{\delta SDF_i}{\delta CAD_m} \cong \frac{SDF_i\left(CAD_m + \frac{h_m}{2}\right) - SDF_i\left(CAD_m - \frac{h_m}{2}\right)}{h_m}, \qquad \forall i \in \omega, m \in \Omega_{param},$$

where $\Omega_{param}$ is a set of the CAD parameters, where $CAD_m$ is a respective CAD parameter of the set, and where $h_m > 0$ is a small perturbation. In other words, the approximated derivatives of the signed distance field with respect to the CAD parameters may be computed using a finite difference scheme. The above formula is a centered finite difference scheme, but other finite difference schemes may alternatively be used. By definition, the signed distance changes linearly as one moves away from the closest point to the surface of the CAD model. Therefore, a finite differences scheme proves very reliable at capturing the first order derivatives of the SDF. Furthermore, as the finite difference scheme is strictly a geometrical process then the computational costs are low also for the case of having many CAD parameters as design variables.

Each sensitivity $\frac{\delta KPI_n}{\delta CAD_m}$ may be of the type:

$$\frac{\delta KPI_n}{\delta CAD_m} = \sum_{i \in \omega} \frac{\delta KPI_n}{\delta \rho_i} \frac{\delta \rho_i}{\delta SDF_i} \frac{\delta SDF_i}{\delta CAD_m}, \qquad \forall n \in \Omega_{score}, m \in \Omega_{param}$$

where $KPI_n$ is the respective performance indicator of which derivative the sensitivity approximates, and where $\Omega_{score}$ is the set of performance indicators.

As previously discussed, the method may comprise, prior to the optimization, computing the sensitivities. This may comprise the following steps:

- discretizing a spatial or planner region encompassing the CAD model or a geometrical representation thereof (*e.g.* a B-rep obtained from the feature tree) into the previously-discussed discrete 3D or 2D space;
- computing the signed distance field by computing the distribution of signed distance values on the elements of the discrete space;
- computing the approximated derivatives of the signed distance field with respect to the CAD parameters, for example according to the previously-discussed formula:

$$\frac{\delta SDF_i}{\delta CAD_m} \cong \frac{SDF_i\left(CAD_m + \frac{h_m}{2}\right) - SDF_i\left(CAD_m - \frac{h_m}{2}\right)}{h_m}, \qquad \forall i \in \omega, m \in \Omega_{param},$$

- computing the density field based on the signed distance field, for example using the previously-discussed formula:

$$\rho_i(SDF_i) = \frac{1}{1 + e^{\frac{SDF_i}{0.2\alpha \times 2l}}}, \qquad \forall \, i \in \omega$$

- computing the approximated derivates of the density field with respect to the signed distance field, for example using the previously-discussed formula:

$$\frac{\delta \rho_i}{\delta SDF_i} = -\frac{e^{\frac{SDF_i}{0.2\alpha \times 2l}}}{\left(1 + e^{\frac{SDF_i}{0.2\alpha \times 2l}}\right)^2}, \qquad \forall i \in \omega$$

- evaluating the performance indicator(s) on the density field;
- computing the approximated derivatives of the performance indicators with respect to the density field;
- computing the sensitivities, using for example the previously discussed formula:

$$\frac{\delta KPI_n}{\delta CAD_m} = \sum_{i \in \omega} \frac{\delta KPI_n}{\delta \rho_i} \frac{\delta \rho_i}{\delta SDF_i} \frac{\delta SDF_i}{\delta CAD_m}, \qquad \forall n \in \Omega_{score}, m \in \Omega_{param}.$$

Evaluating the performance indicator(s) on the density field may be carried out by any suitable method known in the art, for example using Finite Element Analysis for calculating the Physical KPIs and using Computational Geometry of the Finite Element Model for calculating geometrical KPIs. For example:

$$KPI_n(\rho) = \begin{cases} Finite\ Element\ Analysis\ for\ physical\ KPI \\ Computational\ Geometry\ for\ geometrical\ KPI \end{cases}, \qquad \forall n \in \Omega_{score}.$$

Computing the approximated derivatives of the performance indicators with respect to the density field may be performed as known in the art, for example using Adjoint Analysis for Physical KPI and using Analytical Derivation for geometrical KPI. For example:

$$\frac{\delta KPI_n}{\delta \rho_i} = \begin{cases} Adjoint\ sensitivity\ analysis\ for\ physics\ KPI \\ Analytical\ derivation\ for\ geometry\ KPI \end{cases},$$

$$\forall n \in \Omega_{score}, i \in \omega$$

The evaluation of the performance indicators and the computation of the approximated derivatives of these indicators with respect to the density field by the above-discussed examples of methods (Finite Element Analysis, Computational geometry, Adjoint sensitivity, and Analytical derivation) are methods known *per se* in the field of topology optimization, and that are discussed in reference Martin. P. Bendsoe and Ole Sigmund, Topology Optimization, Springer, 2004, ISBN: 978-3-662-05086-6, which is incorporated herein by reference.

An implementation of the method is now discussed.

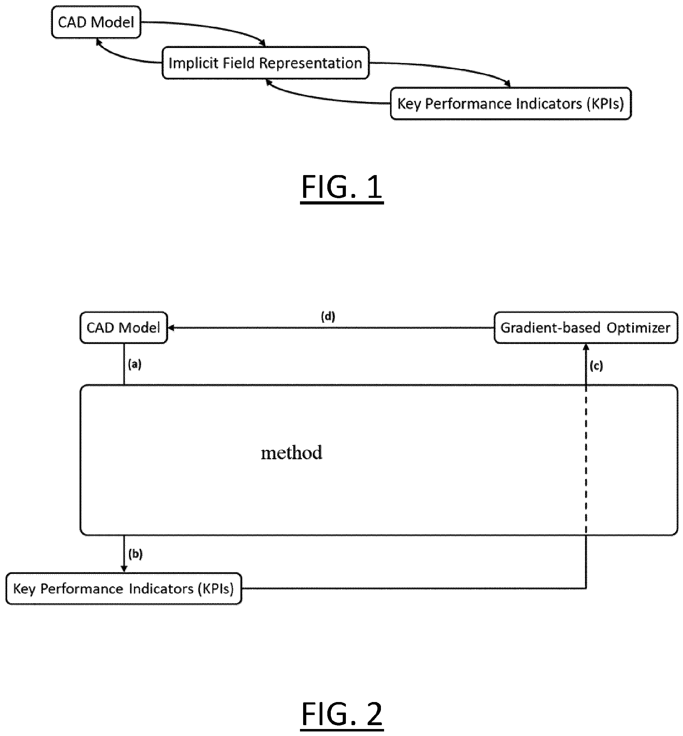

The implementation introduces an implicit field representation as an intermediate step between the CAD model parameters and the evaluated KPIs. This implicit field allows expressing a set of low-level variables and mathematically connecting them to both the CAD parameters and the KPI scores. This formulation also allows determining gradients, to be applied in the optimization scheme. FIG. 1 shows a diagram illustrating conceptually how the implicit field acts as a pivot point between the CAD model parameters and KPIs. The figure illustrates the strategy of the implementation where the implicit field representation is introduced as a pivot to allow efficient optimization of the CAD model.

The implementation allows optimizing directly a high-level CAD representation, meaning that the resulting object is still a CAD model (contrary to e.g. Topology Optimization or other non-parametric optimization approaches). It uses highly efficient gradient-based optimization schemes to quickly converge to improved designs. Therefore, the present approach is faster for simple optimization problems but also have a significantly better numerical scaling in computational costs and thereby, allowing the optimization problem to have a much larger number of design variables (contrary to e.g. Trial-and-Error Parametric Design Optimization or other zero order optimization approaches).

The implementation allows controlling the "smoothness" of the optimization problem to efficiently navigate the feasible solution space. Especially, this permits smoothly optimizing models even if they start as topologically and geometrically disconnected solids. The implementation is compatible with any real-valued CAD parameter without any additional implementation or interfacing effort with the CAD representation (contrary to e.g. Moving Morphable Components or similar approaches): as long as the high level design parameter modifies the geometry in some way, it should affect the intermediate implicit field and therefore, be captured by the calculated gradients. Numerically, the implementation is robust with respect to heterogeneous parameters and drastic changes in the geometry or the topology which are to be expected for CAD models of industrial design applications. The implementation is compatible with any existing KPI for which one can obtain derivatives with respect to the low level variables of the intermediate implicit field. Therefore, the implementation's approach synergizes well with and benefits directly from already existing commercial components present in FEA software packages such as Abaqus/Tosca.

FIG. 2 is a flowchart illustrating the general optimization loop in which the implementation is incorporated, and which comprise the following steps:

(a) First, a CAD model is provided as an input. This CAD model contains certain parameters of interest which will be optimized by the implementation.
(b) Then, the implementation determines a new representation of the CAD model for simulation upon which KPIs are evaluated.
(c) Afterwards, the implementation estimates derivatives of the KPIs with respect to the CAD parameters.
(d) Finally, the derivatives are used by a gradient-based optimization scheme to update the CAD parameters, thereby improving the CAD model.

Mathematically, this can be expressed by the KPI scores being a function of the CAD parameters:

$$KPI_n(CAD_m) \quad \forall n \in \Omega_{score}, m \in \Omega_{param}$$

where $\Omega_{score}$ is the set of KPI scores considered for a given optimization problem (i.e. physical or/and geometrical KPIs applied for objectives/constraints) and $\Omega_{param}$ is the set of CAD parameters being optimized (i.e. the high-level design variables).

Additionally, the implementation provides a method to evaluate the derivatives of the KPIs with respect to the CAD parameters:

$$\frac{\delta KPI_n}{\delta CAD_m} \quad \forall n \in \Omega_{score}, m \in \Omega_{param}$$

These derivatives enable the employment of efficient gradient-based optimization schemes (e.g. Gradient descent, or more advanced schemes such as the Method of Moving Asymptotes).

**Workflow**

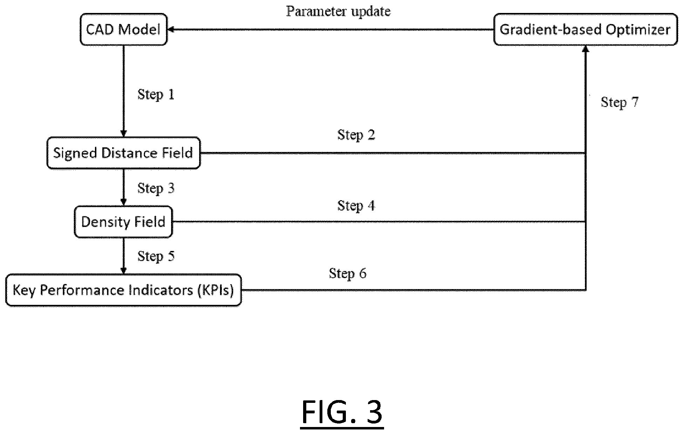

FIG. 3 shows a flowchart illustrating the implementation's workflow. The implementation formulates a composition of functions from the CAD Model to the KPIs, and applies various strategies to evaluate or approximate the respective derivatives of these functions before combining them using the chain rule. The workflow is now discussed with reference to FIG. 3.

**Step 1.**

The spatial region encompassing the CAD model is discretized into a mesh of volumetric elements (elements can be tetrahedral, hexahedral, regular cubes). For each element, the implementation evaluates its distance to the surface of the CAD model. This distance value is signed, indicating if the element is inside or outside the solid object described by the CAD model. By convention a negative distance indicates an element inside the CAD model. An alternative convention may be used. The Signed Distance Field (SDF) is a function of the CAD parameters as follows:

$$SDF_i(CAD), \qquad \forall\, i \in \omega$$

where $\omega$ is the set of elements for the given discretization (i.e. the low-level variables). It is to be noted that a regular grid discretization, also not mandatory, allows the most efficient computations of the signed distance field.

**Step 2.**

The derivatives of the SDF with respect to the CAD parameters are estimated using a finite differences scheme. This is achieved by sequentially applying a small perturbation $h_m$ to each CAD parameter and observing the impact on the SDF values as follows:

$$\frac{\delta SDF_i}{\delta CAD_m} \cong \frac{SDF_i\left(CAD_m + \frac{h_m}{2}\right) - SDF_i\left(CAD_m - \frac{h_m}{2}\right)}{h_m}, \qquad \forall i \in \omega, m \in \Omega_{param}$$

By definition, the signed distance changes linearly as one moves away from the closest point to the surface of the CAD model. Therefore, a finite differences scheme proves very reliable at capturing the first order derivatives of the SDF. Note that the present formulation uses a centered finite difference scheme, but other finite difference schemes would also be applicable. Additionally, as the present finite difference is strictly a geometrical process then the computational costs are low also for the case of having many CAD parameters as design variables.

**Step 3.**

The SDF is transformed into a density field having values $0 \le \rho \le 1$ using a smooth Heaviside projection as follows:

$$\rho_i(SDF_i) = \frac{1}{1 + e^{\frac{SDF_i}{0.2\alpha \times 2l}}}, \qquad \forall\, i \in \omega$$

where $\alpha \ge 0$ is the steepness coefficient of the smooth Heaviside projection and $l$ is the average size of the elements in the discretization. In the implementation, $\alpha$ may equal 1. Controlling the value of the steepness coefficient can be help navigate highly non-linear solution spaces by "smoothing out" the non-linearity at the beginning of the optimization process and then progressively increasing the steepness coefficient as the optimization converges. This projection step allows to transform the signed distances into physically interpretable density values. Note, any other function approximating the Heaviside function with the appropriate output range and well-defined first order derivatives could be used in this step.

**Step 4.**

The derivatives of the density field with respect to the SDF are calculated by analytical differentiation as follows:

$$\frac{\delta \rho_i}{\delta SDF_i} = -\frac{e^{\frac{SDF_i}{0.2\alpha \times 2l}}}{\left(1 + e^{\frac{SDF_i}{0.2\alpha \times 2l}}\right)^2}, \qquad \forall i \in \omega$$

Separating the density projection from the SDF allows using a separate differentiation strategy. This is advantageous because finite difference schemes can be less reliable for highly non-linear functions such as this density projection step. On the other hand, analytical derivation is perfectly tractable for this choice of smooth Heaviside projection and yields the exact solution for negligible computational cost.

**Step 5.**

Each KPI is evaluated based on the density field as known in the art, typically using Finite Element Analysis for calculating the Physical KPIs and using Computational Geometry of the Finite Element Model for calculating geometrical KPIs. One then obtains:

$$KPI_n(\rho) = \begin{cases} Finite\ Element\ Analysis\ for\ physical\ KPI \\ Computational\ Geometry\ for\ geometrical\ KPI \end{cases}, \qquad \forall n \in \Omega_{score}$$

**Step 6.**

The derivatives of the KPIs with respect to the density field are calculated as known in the art, typically using Adjoint Analysis for Physical KPI and using Analytical Derivation for geometrical KPI. One then obtains:

$$\frac{\delta KPI_n}{\delta \rho_i} = \begin{cases} Adjoint\ sensitivity\ analysis\ for\ physics\ KPI \\ Analytical\ derivation\ for\ geometry\ KPI \end{cases},$$

$$\forall n \in \Omega_{score}, i \in \omega$$

**Step 7.**

The derivatives computed in steps 2, 4 and 6 are combined using the chain rule to calculate the derivatives of the KPIs with respect to the CAD parameters as follows:

$$\frac{\delta KPI_n}{\delta CAD_m} = \sum_{i \in \omega} \frac{\delta KPI_n}{\delta \rho_i} \frac{\delta \rho_i}{\delta SDF_i} \frac{\delta SDF_i}{\delta CAD_m}, \qquad \forall n \in \Omega_{score}, m \in \Omega_{param}$$

These derivatives can then be applied in an iterative gradient-based optimization scheme for completing an optimization loop having CAD parameters as design variables.

The implementation allows ensuring manufacturability of the designs by preserving the characteristics of the CAD model. For example:

- CAD model defined as a thin plate trimmed by a 2D sketch will necessarily be manufacturable via laser-cutting, plasma-cutting or 2.5-axis milling,
- CAD models defined as a revolution of non-overlapping profile around an axis will be manufacturable via turning or lathe machining, or

- CAD models defined with operators preventing overhang regions will be more easily manufacturable via additive manufacturing, molding or casting.

Examples of CAD models with these properties are now discussed. Because all optimized designs produced by the implementation will be CAD models of the same nature as the initial CAD model, they can be loaded in CAD/CAM software such as Fusion 360, FreeCAD, CATIA & SOLIDWORKS to automatically generate manufacturing instructions and tool paths for the desired manufacturing process.

A 2D example of an optimization scenario that uses the implementation is now discussed.

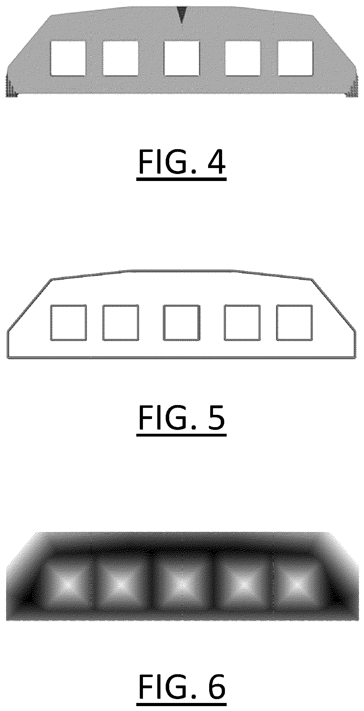

The optimization scenario consists of a beam fixed at the bottom left and at the bottom right corners, and having a physical load applied at the top middle, as illustrated on FIG. 4. This optimization scenario, known as the MBB Beam, is a classical benchmark problem based on the design of supporting beams from the aerospace company Messerschmitt-Bölkow-Blohm (MBB). The KPIs are to minimize the deformation at the loaded point and the total mass of the beam design.

The CAD model is defined as a thin plate trimmed by the sketch shown on FIG. 5 consisting of 28 points which positions are considered as high-level CAD parameters and will be the design variables for the optimization. This particular example of CAD definition ensures that the resulting design can be manufactured with a small number of straight cuts through a plate and is therefore well suited for fast and inexpensive manufacturing processes such as laser-cutting, plasma-cutting or 2.5-axis milling.

The signed distance field is computed on the CAD model (step 1) giving the following field shown as a grayscale image shown in FIG. 6. The dark regions have a negative sign indicating that these are inside the solid object (conversely, regions outside the CAD model have a positive sign and are indicated as brighter regions).

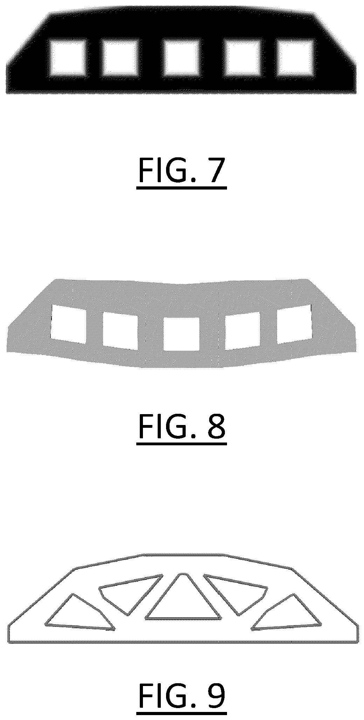

The smooth Heaviside projection yields the following density field (step 3) where the density values closest to 1 are shown in black in FIG. 7 (conversely, regions with a density closest to 0 are shown in white). The smoothness coefficient of the Heaviside projection function controls the thickness of the band between solid and void having intermediate relative densities at the boundary of the CAD model.

The physical deformation of the object is evaluated using Finite Element Analysis (step 5) and illustrated on FIG. 8. The mass of the object is evaluated by geometrically based on the density field.

The three sets of derivatives are calculated (steps 2, 4, 6) and combined (step 7) as total derivatives being inputs for the optimization scheme in each optimization iteration. The implementation iteratively updates the CAD parameters until convergence of the optimization is reached. The present beam design converges after about 30 optimization iterations and achieves a 35% decrease in the deformation and a 20% decrease in mass compared to the initial CAD model. The optimized CAD model is illustrated on FIG. 9 as a sketch constituted of 28 points whose positions have been optimized.

As previously said, and as further discussed hereinafter, the method may be included in a production process for producing/manufacturing the manufacturing product, the production process comprising using the CAD model optimized by the method for manufacturing. Using the CAD model for manufacturing may comprise a step of manufacturing the product. In the case of the above-discussed example of the beam, manufacturing the beam may be done by laser-cutting, plasma-cutting or 2.5-axis milling.

A 3D example of an optimization scenario that uses the implementation is now discussed.

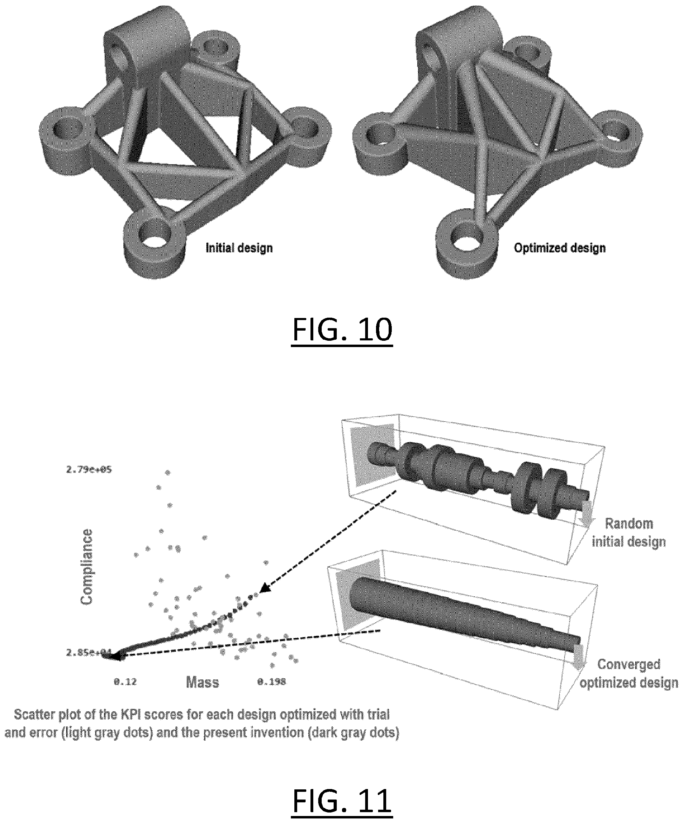

FIG. 10 illustrates the result of the implementation on this industrial design scenario inspired from the GE Jet Engine Bracket Challenge (https://grabcad.com/challenges/ge-jet-engine-bracket-challenge). The following table shows a comparison between properties of the initial design (i.e. input CAD model) and the optimized design (i.e. the CAD model that results from the optimization step).

|  | Total mass | Maximum displacement | Peak von Mises stress |
|---|---|---|---|
| **Initial design (baseline)** | **1.00** | **1.00** | **1.00** |
| **Optimized design** | **0.92 (8% improvement)** | **0.62 (38% improvement)** | **0.43 (57% improvement)** |

The CAD model in this example is a 3D bracket design with 20 distinct and heterogeneous CAD parameters controlling the thicknesses, heights and orientation of the ribs. Moreover an operator in the CAD feature tree applies an orthogonal projection of the solid object onto the Z- plan. This has the effect of ensuring that the object is free of overhangs and could therefore be manufactured via additive manufacturing, molding, casting or 2.5-axis milling. As previously said, and as further discussed hereinafter, the method may be included in a production process for producing/manufacturing the manufacturing product, the production process comprising using the CAD model optimized by the method for manufacturing. Using the CAD model for manufacturing may comprise a step of manufacturing the product. In the case of the 3D bracket, manufacturing the beam may be done by additive manufacturing, molding, casting or 2.5-axis milling.

Note that the functional cylindrical holes for the bolt connections are milled separately after manufacturing the part and their overhangs are therefore not problematic. Right drawing of FIG. 10 illustrate the manufacturability as overhangs are prevented.

The comparison illustrated in the above table and on FIG. 10 shows the change of shape and KPI scores between the initial and optimized designs. The introduction of the peak von Mises stress KPI illustrates how the approach is compatible with a wide variety of KPIs without any additional implementation or interfacing effort.

It is now discussed a 3D comparative example.

FIG. 11 shows a comparison of a trial-and-error approach and the implementation's approach to optimize the CAD model of a rod consisting of 20 parameterized cylinders with varying radii acting as design variables. This CAD modeling strategy ensures that the design is radially symmetric around its axis and can therefore be manufactured via turning or lathe machining. The method may be included in a production process comprising such a manufacturing step. The rod is fixed on one end (displayed as a light gray rectangle) and a bending force is applied at the other end (displayed as a light gray arrow). The optimization goal is to minimize the structural compliance and mass of the design, meaning that the optimal designs would be in the bottom left corner of the compliance vs mass scatter plot. The results of the trial and error approach are displayed as the light gray dots in the scatter plot. The results of the implementation's approach are displayed as the dark gray dots in the scatter plot and both the initial and converged 3D designs are visualized on the right. One can see that the implementation allows iteratively improving the compliance and mass of the design by tracing a smooth path through the solution space. Moreover, the converged design achieves significantly better KPI scores than any designs obtained with the trial and error approach.

As previously discussed, "Designing a manufacturing product" designates any action or series of actions which is at least a part of a process of elaborating a modeled object (3D or 2D) of the manufacturing product. The method is part of such a process, as the method optimizes one or more performance indicators of a CAD model.

The method thus generally manipulates modeled objects, such as the CAD model provided as input to the method and processed (optimized by the method). A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, and/or a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system.

By CAD solution (e.g. a CAD system or a CAD software), it is additionally meant any system, software or hardware, adapted at least for designing a modeled object on the basis of a graphical representation of the modeled object and/or on a structured representation thereof (e.g. a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

In the context of CAD, a modeled object may typically be a 2D or 3D modeled object, e.g. representing a product such as a part or an assembly of parts, or possibly an assembly of products. The 2D or 3D modeled object may be a manufacturing product, i.e. a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The modeled object processed by the method the method is a CAD model, that includes feature tree. Such a model may stem from a CAE model and may results from a CAE to CAD conversion process, that the method may for example comprise at an initial stage.

The CAD model involved in the method is feature-based (it comprises a feature tree, and optionally a corresponding B-rep obtained by executing the feature tree). A feature-based 3D model allows (e.g. during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (e.g. during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

The generation of a custom computer program from CAD files may be automated. Such generation may therefore be error prone and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, producing a physical product corresponding to the modeled object outputted by the method. The production process may comprise the following steps:

- (e.g. automatically) applying the method, thereby obtaining the optimized CAD model outputted by the method;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise the following steps:

- editing the obtained CAD model;
- performing simulation(s) based on the CAD model or on a corresponding CAD model (e.g. the CAE model from which the CAD model stems, after a CAE to CAD conversion process), such as simulations for validation of mechanical, use and/or manufacturing properties and/or constraints (e.g. structural simulations, thermodynamics simulation, aerodynamic simulations);
- editing the CAD model based on the results of the simulation(s);
- (i.e. depending on the manufacturing process used, the production of the mechanical product may or may not comprise this step) (e.g. automatically) determining a manufacturing file/CAM file based on the (e.g. edited) CAD model, for production/manufacturing of the manufacturing product;
- sending the CAD file and/or the manufacturing file/CAM file to a factory; and/or
- (e.g. automatically) producing/manufacturing, based on the determined manufacturing file/CAM file or on the CAD model, the mechanical product originally represented by the model outputted by the method. This may include feeding (e.g. automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, e.g. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (i.e. a designer), performing one or more of the CAD model, e.g. by using a CAD solution. The modifications of the CAD model may include one or more modifications each of a geometry and/or of a parameter of the CAD model. The modifications may include any modification or series of modifications performed on a feature tree of the model (e.g. modification of feature parameters and/or specifications) and/or modifications performed on a displayed representation of the CAD model (e.g. a B-rep). The modifications are modifications which maintain the technical functionalities of the part/product, i.e. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any known CAM (Computer-Aided Manufacturing) or CAD to CAM solution for (e.g. automatically) determining a production file from the CAD model (e.g. any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or

- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing (i.e. 3D printing). In this case, the production process does not comprise the step of determining the CAM file and directly proceeds to the producing/manufacturing step, by directly (e.g. and automatically) feeding a 3D printer with the CAD model. 3D printers are configured for, upon being fed with a CAD model representing a mechanical product (e.g. and upon launching, by a 3D printer operator, the 3D printing), directly and automatically 3D print the mechanical product in accordance with the CAD model. In other words, the 3D printer receive the CAD model, which is (e.g. automatically) fed to it, reads *(e.g.* automatically) the CAD model, and prints *(e.g.* automatically) the part by adding together material, e.g. layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user *(e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (e.g. automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part *(i.e.* a part manufactured by machining), such as a milled part *(i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (e.g. automatically) checking if the CAD model has any geometric particularity (e.g. error or artefact) that may affect the production process and (e.g. automatically) correcting such particularities. For example, machining or milling based on the CAD model may not be carried out if the CAD model still comprises sharp edges (because the machining or milling tool cannot create sharp edges), and in such a case the determination of the CAM file may comprise *(e.g.* automatically) rounding or filleting such sharp edges *(e.g.* with a round or fillet radius that corresponds, e.g. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (e.g. rounding or filleting of geometries) may be carried out automatically as previously discussed, but also, by a user (e.g. a machining engineer), which performs the correction by hand on a CAD and/or CAM solution, e.g. the solution constraining the user to perform corrections that make the CAD model compliant with specifications of the tool used in the machining process.

Further to the check, the determination of the CAM file may comprise (e.g. automatically) determining the machining or milling path, i.e. the path to be taken by the machining tool to machine the product. The path may comprise a set of coordinates and/or a parameterized trajectory to be followed by the machining tool for machining, and determining the path may comprise (e.g. automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, e.g. that the tool continuously follows without breaking contact with the material to be cut. Alternatively, the path may be a concatenation of a sequence sub-paths to be followed in a certain order by the tool, e.g. each being continuously followed by the tool without breaking contact with the material to be cut. Optionally, the determination of the CAM file may then comprise (e.g. automatically) setting machine parameters, including cutting speed, cut/pierce height, and/or mold opening stroke, for example based on the determined path and on the specification of the machine. Optionally, the determination of the CAM file may then comprise (e.g. automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (e.g. directly and automatically) fed to the machining tool and/or the machining tool may then (e.g. directly and automatically) be programmed by reading the file, upon which the production process comprises the producing/manufacturing step where the machine performs the machining of the product according to the production file, e.g. by directly and automatically executing the production file. The machining process comprises the machining tool cutting a real-world block of material to reproduce the geometry and/or distribution of material captured by the CAD model, *e.g.* up to a tolerance error *(e.g.* tens of microns for milling).

The product/part may alternatively be a molded part, *i.e.* a part manufactured by molding (e.g. injection-molding). In such a case, the production process may comprise the step of determining the CAM file. This step may be carried out automatically, by any suitable CAM solution to automatically obtain a CAM file from a CAD model of a molded part. The determining of the CAM file may comprise (e.g. automatically) performing a sequence of molding checks based on the CAD model to check that the geometry and/or distribution of material captured by the CAD model is adapted for molding, and (e.g. automatically) performing the appropriate corrections if the CAD model is not adapted for molding. Performing the checks and the appropriate corrections (if any) may be carried out automatically, or, alternatively, by a user (e.g. a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (e.g. automatically) performing the molding based on the outputted file, where the mold shapes, for the determined hardening time, a liquid material into a shape that corresponds to the geometry and/or distribution of material captured by the CAD model, *e.g.* up to a tolerance error *(e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (e.g. automatically) determining a CAM file based on the CAD model. The CAD model represents the stamping part, e.g. possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, e.g. as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, e.g. directly and automatically, the CAM file, and perform the stamping process (e.g. automatically) based on the file. The stamping process may comprise stamping (e.g. punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 12 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for designing a manufacturing product, the method comprising:

    - providing

        ◦ a CAD model representing the manufacturing product, the CAD model including a feature tree having one or more CAD parameters each having an initial value, and
        ◦ an optimization program specified by one or more use and/or manufacturing performance indicators, the one or more indicators comprising one or more objective function(s) and/or one or more constraints; and

    - modifying the initial values of the one or more CAD parameters by solving the optimization program using a gradient-based optimization method, the optimization method having as free variable the one or more CAD parameters, the optimization method using sensitivities, each sensitivity being an approximation of a respective derivative of a respective performance indicator with respect to a respective CAD parameter.

2. The method of claim 1, wherein the sensitivities are compositions of:

    - approximated respective derivatives each of a respective performance indicator with respect to a scalar field, the scalar field being an implicit representation of the manufacturing product, and
    - approximated respective derivatives each of the scalar field with respect to a respective CAD parameter.

3. The method of claim 2, wherein the sensitivities are compositions of:

- approximated respective derivatives each of a respective performance indicator with respect to a density field, the density field representing a distribution of material density of the manufacturing product,
- approximated respective derivatives each of the density field with respect to a signed distance field, the signed distance field being a distribution of signed distances with respect to an outer surface representation of the manufacturing product, and
- approximated respective derivatives each of the signed distance field with respect to a respective CAD parameter.

4. The method of claim 3, wherein the density field corresponds to a projection of the signed distance field by a function that maps ] - oo; +∞[ onto [0; 1] and that has well-defined first order derivatives.

5. The method of claim 4, wherein the function is a smooth Heaviside projection.

6. The method of claim 5, wherein the density field is a distribution of material density values $\rho_i(SDF_i)$, with $\rho_i$ being a smooth Heaviside projection of $SDF_i$ of the type:

$$\rho_i(SDF_i) = \frac{1}{1 + e^{\frac{SDF_i}{0.2\alpha \times 2l}}}, \qquad \forall\, i \in \omega,$$

where the signed distance field is a distribution of signed distances $SDF_i$ each from an element i of a discretization $\omega$ of a region encompassing a geometric representation of the product to the outer surface representation of the product, where $\alpha \geq 0$ is a steepness coefficient of the smooth Heaviside projection, and where $l$ is an average size of the elements in the discretization.

7. The method of claim 6, wherein each respective approximated derivative $\frac{\delta\rho_i}{\delta SDF_i}$ of the density field with respect to the signed distance field is of the type:

$$\frac{\delta\rho_i}{\delta SDF_i} = -\frac{e^{\frac{SDF_i}{0.2\alpha \times 2l}}}{\left(1 + e^{\frac{SDF_i}{0.2\alpha \times 2l}}\right)^2}, \qquad \forall i \in \omega.$$

8. The method of any one of claims 3 to 7, wherein each respective approximated derivative $\frac{\delta SDF_i}{\delta CAD_m}$ of the signed distance field with respect to a respective CAD parameter is of the type:

$$\frac{\delta SDF_i}{\delta CAD_m} \cong \frac{SDF_i\left(CAD_m + \frac{h_m}{2}\right) - SDF_i\left(CAD_m - \frac{h_m}{2}\right)}{h_m}, \qquad \forall i \in \omega, m \in \Omega_{param},$$

where the signed distance field is a distribution of signed distances $SDF_i$ each from an element i of a discretization $\omega$ of a region encompassing a geometric representation of the product to the outer surface representation of the product, where $\Omega_{param}$ is a set of the CAD parameters, where $CAD_m$ is a respective CAD parameter of the set, and where $h_m > 0$ is a small perturbation.

9. The method of any one of claims 3 to 8, wherein each sensitivity $\frac{\delta KPI_n}{\delta CAD_m}$ is of the type:

$$\frac{\delta KPI_n}{\delta CAD_m} = \sum_{i \in \omega} \frac{\delta KPI_n}{\delta\rho_i}\frac{\delta\rho_i}{\delta SDF_i}\frac{\delta SDF_i}{\delta CAD_m}, \qquad \forall n \in \Omega_{score}, m \in \Omega_{param}$$

where the signed distance field is a distribution of signed distances $SDF_i$ each from an element i of a discretization

$\omega$ of a region encompassing a geometric representation of the product to the outer surface representation of the product, where $\Omega_{param}$ is a set of the CAD parameters, where $CAD_m$ is the respective CAD parameter, where the density field is a distribution of material density values $\rho_i(SDF_i)$, where $KPI_n$ is the respective performance indicator, and where $\Omega_{score}$ is the set of performance indicators.

10. The method of any one of claims 1 to 9, wherein the method comprises, prior to solving the optimization program, computing the sensitivities.

11. A computer-program comprising instructions which, when the program is executed on a computer, cause the computer to carry out the method of any one of claims 1 to 10.

12. A computer-readable storage medium having recorded thereon the computer program of claim 11.

13. A system comprising a processor coupled to a memory, the memory having recorded thereon the computer program of claim 11.

**Amended claims in accordance with Rule 137(2) EPC.**

**1.** A computer-implemented method for resource-efficient optimization of a CAD model representing a manufacturable product, the method comprising:

- providing

o the CAD model, the CAD model including a feature tree having one or more CAD parameters each having an initial value, and
o an optimization program specified by one or more use and/or manufacturing performance indicators, the one or more indicators comprising one or more objective function(s) and/or one or more constraints; and

- modifying the initial values of the one or more CAD parameters by solving the optimization program using a gradient-based optimization method, the optimization method having as free variable the one or more CAD parameters, the optimization method using sensitivities, each sensitivity being an approximation of a respective derivative of a respective performance indicator with respect to a respective CAD parameter,

the modifying resulting in the one or more CAD model parameters being optimized with respect to the one or more indicators, the optimized CAD model being loadable in a CAD/CAM software to automatically generate manufacturing instructions for manufacturing the optimized product represented by the optimized CAD model, wherein the sensitivities are compositions of:

- approximated respective derivatives each of a respective performance indicator with respect to a density field, the density field representing a distribution of material density of the product,
- approximated respective derivatives each of the density field with respect to a signed distance field, the signed distance field being a distribution of signed distances with respect to an outer surface representation of the product, and
- approximated respective derivatives each of the signed distance field with respect to a respective CAD parameter,

wherein each sensitivity $\dfrac{\delta KPI_n}{\delta CAD_m}$ is of the type:

$$\frac{\delta KPI_n}{\delta CAD_m} = \sum_{i \in \omega} \frac{\delta KPI_n}{\delta \rho_i} \frac{\delta \rho_i}{\delta SDF_i} \frac{\delta SDF_i}{\delta CAD_m}, \qquad \forall n \in \Omega_{score}, m \in \Omega_{param}$$

where the signed distance field is a distribution of signed distances $SDF_i$ each from an element $i$ of a discretization $\omega$ of a region encompassing a geometric representation of the product to the outer surface representation of

the product, where $\Omega_{param}$ is a set of the CAD parameters, where $CAD_m$ is the respective CAD parameter, where the density field is a distribution of material density values $\rho_i(SDF_i)$, where $KPI_n$ is the respective performance indicator, and where $\Omega_{score}$ is the set of performance indicators,

wherein the density field corresponds to a projection of the signed distance field by a function that maps $]-\infty; +\infty[$ onto $[0; 1]$ and that has well-defined first order derivatives.

2. The method of claim 1, wherein the function is a smooth Heaviside projection.

3. The method of claim 2, wherein the density field is a distribution of material density values $\rho_i(SDF_i)$, with $\rho_i$ being a smooth Heaviside projection of $SDF_i$ of the type:

$$\rho_i(SDF_i) = \frac{1}{1 + e^{\frac{SDF_i}{0.2\alpha \times 2l}}}, \qquad \forall\, i \in \omega,$$

where $\alpha \geq 0$ is a steepness coefficient of the smooth Heaviside projection, and where $l$ is an average size of the elements in the discretization.

4. The method of claim 3, wherein each respective approximated derivative $\frac{\delta\rho_i}{\delta SDF_i}$ of the density field with respect to the signed distance field is of the type:

$$\frac{\delta\rho_i}{\delta SDF_i} = -\frac{e^{\frac{SDF_i}{0.2\alpha \times 2l}}}{\left(1 + e^{\frac{SDF_i}{0.2\alpha \times 2l}}\right)^2}, \qquad \forall i \in \omega.$$

5. The method of any one of claims 1 to 4, wherein each respective approximated derivative $\frac{\delta SDF_i}{\delta CAD_m}$ of the signed distance field with respect to a respective CAD parameter is of the type:

$$\frac{\delta SDF_i}{\delta CAD_m} \cong \frac{SDF_i\left(CAD_m + \frac{h_m}{2}\right) - SDF_i\left(CAD_m - \frac{h_m}{2}\right)}{h_m}$$

, $\forall i \in \omega$, $m \in \Omega_{param}$, where $h_m > 0$ is a small perturbation.

6. The method of any one of claims 1 to 5, wherein the method comprises, prior to solving the optimization program, computing the sensitivities.

7. A computer-program comprising instructions which, when the program is executed on a computer, cause the computer to carry out the method of any one of claims 1 to 6.

8. A computer-readable storage medium having recorded thereon the computer program of claim 7.

9. A system comprising a processor coupled to a memory, the memory having recorded thereon the computer program of claim 7.

1. A computer-implemented method for resource-efficient optimization of a CAD model representing a manufacturable product, the method comprising:

- providing

o the CAD model, the CAD model including a feature tree having one or more CAD parameters each having an initial value, and
o an optimization program specified by one or more use and/or manufacturing performance indicators, the one or more indicators comprising one or more objective function(s) and/or one or more constraints; and

- modifying the initial values of the one or more CAD parameters by solving the optimization program using a gradient-based optimization method, the optimization method having as free variable the one or more CAD parameters, the optimization method using sensitivities, each sensitivity being an approximation of a respective derivative of a respective performance indicator with respect to a respective CAD parameter,

the modifying resulting in the one or more CAD model parameters being optimized with respect to the one or more indicators, the optimized CAD model being loadable in a CAD/CAM software to automatically generate manufacturing instructions for manufacturing the optimized product represented by the optimized CAD model, wherein the sensitivities are compositions of:

- approximated respective derivatives each of a respective performance indicator with respect to a density field, the density field representing a distribution of material density of the product,
- approximated respective derivatives each of the density field with respect to a signed distance field, the signed distance field being a distribution of signed distances with respect to an outer surface representation of the product, and
- approximated respective derivatives each of the signed distance field with respect to a respective CAD parameter,

wherein each sensitivity $\frac{\delta KPI_n}{\delta CAD_m}$ is of the type:

$$\frac{\delta KPI_n}{\delta CAD_m} = \sum_{i \in \omega} \frac{\delta KPI_n}{\delta \rho_i} \frac{\delta \rho_i}{\delta SDF_i} \frac{\delta SDF_i}{\delta CAD_m}, \qquad \forall n \in \Omega_{score}, m \in \Omega_{param}$$

where the signed distance field is a distribution of signed distances $SDF_i$ each from an element $i$ of a discretization $\omega$ of a region encompassing a geometric representation of the product to the outer surface representation of the product, where $\Omega_{param}$ is a set of the CAD parameters, where $CAD_m$ is the respective CAD parameter, where the density field is a distribution of material density values $\rho_i(SDF_i)$, where $KPI_n$ is the respective performance indicator, and where $\Omega_{score}$ is the set of performance indicators, wherein the density field corresponds to a projection of the signed distance field by a function that maps ] - ∞; +∞[ onto [0; 1] and that has well-defined first order derivatives, wherein:

- the product is a beam fixed at the bottom left and at the bottom right corners, the optimization program minimizing, under a physical load applied at the top middle of the beam, the deformation at the loaded point and the total mass of the beam, the performance indicators consisting in the deformation at the loaded point and the total mass of the beam, the CAD model of the beam being defined as a thin plate trimmed by a sketch consisting of points which positions form the CAD parameters, the optimized CAD model being usable for manufacturing the beam via laser-cutting, plasma-cutting, or 2.5-axis milling,
- the product is a 3D bracket, the CAD parameters consisting of CAD parameters controlling the thicknesses, heights and orientations of the ribs and parameters of a CAD operator that applies an orthogonal projection of the CAD model onto the Z-plan so as to ensure that the model is free of overhangs, the performance indicators including the total mass, the maximum displacement and the Peak von Mises stress, the optimized CAD model being usable for manufacturing the bracket via additive manufacturing, molding, casting, or 2.5-axis milling, or
- the product is a rod, the CAD model consisting of several parameterized cylinders, the CAD parameters being the radii of the cylinders, the performance indicators consisting of the structural compliance and the mass, the optimization consisting in minimizing the performance indicators under the constraints that the rod is fixed on one end and a bending force is applied to the other end, the optimized CAD model being usable for manufacturing the rod by turning or lathe machining.

**2.** The method of claim 1, wherein the function is a smooth Heaviside projection.

**3.** The method of claim 2, wherein the density field is a distribution of material density values $\rho_i(SDF_i)$, with $\rho_i$ being a smooth Heaviside projection of $SDF_i$ of the type:

$$\rho_i(SDF_i) = \frac{1}{1 + e^{\frac{SDF_i}{0.2\alpha \times 2l}}}, \qquad \forall\, i \in \omega,$$

where $\alpha \geq 0$ is a steepness coefficient of the smooth Heaviside projection, and where $l$ is an average size of the elements in the discretization.

**4.** The method of claim 3, wherein each respective approximated derivative $\frac{\delta\rho_i}{\delta SDF_i}$ of the density field with respect to the signed distance field is of the type:

$$\frac{\delta\rho_i}{\delta SDF_i} = -\frac{e^{\frac{SDF_i}{0.2\alpha \times 2l}}}{\left(1 + e^{\frac{SDF_i}{0.2\alpha \times 2l}}\right)^2}, \qquad \forall i \in \omega.$$

**5.** The method of any one of claims 1 to 4, wherein each respective approximated derivative $\frac{\delta SDF_i}{\delta CAD_m}$ of the signed distance field with respect to a respective CAD parameter is of the type:

$$\frac{\delta SDF_i}{\delta CAD_m} \cong \frac{SDF_i\left(CAD_m + \frac{h_m}{2}\right) - SDF_i\left(CAD_m - \frac{h_m}{2}\right)}{h_m}, \qquad \forall i \in \omega, m \in \Omega_{param},$$

where $h_m > 0$ is a small perturbation.

**6.** The method of any one of claims 1 to 5, wherein the method comprises, prior to solving the optimization program, computing the sensitivities.

**7.** A computer-program comprising instructions which, when the program is executed on a computer, cause the computer to carry out the method of any one of claims 1 to 6.

**8.** A computer-readable storage medium having recorded thereon the computer program of claim 7.

**9.** A system comprising a processor coupled to a memory, the memory having recorded thereon the computer program of claim 7.

FIG. 1

FIG. 2

FIG. 3

FIG. 4

FIG. 5

FIG. 6

FIG. 7

FIG. 8

FIG. 9

Initial design       Optimized design

# FIG. 10

Scatter plot of the KPI scores for each design optimized with trial and error (light gray dots) and the present invention (dark gray dots)

# FIG. 11

FIG. 12

**EP 4 254 252 A1**

EUROPEAN SEARCH REPORT

Application Number

EP 22 30 5411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/286786 A1 (EBRAHIMI MEHRAN [CA] ET AL) 19 September 2019 (2019-09-19)<br>* paragraph [0001] - paragraph [0002] *<br>* abstract *<br>* paragraph [0005] - paragraph [0008] *<br>* paragraph [0010] *<br>* paragraph [0017] - paragraph [0020] *<br>* paragraph [0031] - paragraph [0065] *<br>----- | 1-13 | INV.<br>G06F30/17<br>G06F30/20<br><br>ADD.<br>G06F113/08<br>G06F111/06<br>G06F119/08<br>G06F119/18 |
| X | CHEN XU ET AL: "Gradient-based multidisciplinary design optimization of an autonomous underwater vehicle",<br>APPLIED OCEAN RESEARCH, ELSEVIER, AMSTERDAM, NL,<br>vol. 80, 4 September 2018 (2018-09-04), pages 101-111, XP085496912,<br>ISSN: 0141-1187, DOI:<br>10.1016/J.APOR.2018.08.006<br>* abstract *<br>* page 102 - page 110 *<br>* figure 2, *<br>----- | 1-13 | |
| X | JIAQIN CHEN ET AL: "Shape optimization with topological changes and parametric control",<br>INTERNATIONAL JOURNAL OF NUMERICAL METHODS IN ENGINEERING, CHICHESTER, GB,<br>vol. 71, no. 3,<br>4 December 2006 (2006-12-04), pages 313-346, XP071316393,<br>ISSN: 0029-5981, DOI: 10.1002/NME.1943<br>* abstract *<br>* page 314 - page 315 *<br>* page 317 *<br>* page 322, paragraph 1 *<br>* page 324 - page 335 *<br>----- | 1-13 | TECHNICAL FIELDS SEARCHED (IPC)<br><br>G06F |

The present search report has been drawn up for all claims

| Place of search | Date of completion of the search | Examiner |
|---|---|---|
| Munich | 23 September 2022 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

32

## ANNEX TO THE EUROPEAN SEARCH REPORT
## ON EUROPEAN PATENT APPLICATION NO.

**EP 22 30 5411**

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2022

| Patent document cited in search report | Publication date | Patent family member(s) | Publication date |
|---|---|---|---|
| US 2019286786 A1 | 19-09-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3327593 A

- EP 21306754

**Non-patent literature cited in the description**

- **MARTIN. P. BENDSOE ; OLE SIGMUND.** Topology Optimization. Springer, 2004